# EUROPÄISCHE PATENTSCHRIFT

(11) **EP 2 989 417 B1**
(45) Veröffentlichungstag und Bekanntmachung des Hinweises auf die Patenterteilung: **12.08.2020**
(21) Anmeldenummer: 14722612.0
(22) Anmeldetag: 24.04.2014
(51) Int. Cl.: G01B 7/06, G01D 11/10

(54) **MESSSONDE ZUR MESSUNG DER DICKE DÜNNER SCHICHTEN**
MEASURING PROBE FOR MEASURING THE THICKNESS OF THIN FILMS
SONDE DE MESURE DE L'ÉPAISSEUR DE COUCHES MINCES

(30) Priorität: 26.04.2013 DE 102013104251
(43) Veröffentlichungstag der Anmeldung: 02.03.2016
(73) Patentinhaber: Helmut Fischer GmbH Institut für Elektronik und Messtechnik., 71069 Sindelfingen (DE)
(72) Erfinder: VOLZ, Werner, 71069 Sindelfingen (DE)
(74) Vertreter: Mammel und Maser
(86) Internationale Anmeldenummer: PCT/EP2014/058367
(87) Internationale Veröffentlichungsnummer: WO 2014/174025

(56) Entgegenhaltungen:
- DE-A1- 19 649 515
- DE-A1- 19 735 433
- US-A- 3 975 829

## Beschreibung

Die Erfindung betrifft eine Messsonde zur Messung der Dicke dünner Schichten mit einem Gehäuse und zumindest einem Sensorelement, welches in dessen Längsachse zur Messoberfläche eines Messgegenstandes weisend eine Aufsetzkalotte aufweist, die in der Längsachse des Sensorelementes angeordnet und der zumindest ein Messelement zugeordnet ist.

Aus der DE 197 35 433 A1 ist eine Messsonde zur Messung der Dicke dünner Schichten mit einem Gehäuse, welches einen Sondenfuß umfasst, und zumindest einem in dem Gehäuse angeordneten Sensorelement bekannt. Das Sensorelement weist in dessen Längsachse zur Messoberfläche eines Messgegenstandes weisend eine Aufsetzkalotte auf, wobei ein Federelement eine Aufsetzbewegung des Sensorelementes in Richtung auf die Messoberfläche des Messgegenstandes dämpft.

Zum Positionieren des Sondenfußes des Gehäuses der Messsonde auf der Messoberfläche sind bei dieser Messsonde Aufsetzspitzen erforderlich, die in die Messoberfläche eingedrückt werden, um einen sicheren Stand zu ermöglichen. Nach dem Aufsetzen wird eine Schiebehülse in Aufsetzrichtung nach unten gedrückt, um das Sensorelement zu einer am unteren Ende des Gehäuses angeordneten Folie zu bringen, die eine Druckminimierung des Sensorelementes auf die Messoberfläche bewirkt. Dabei verringert die Eigenspannung der Folie die Federkraft des Federelementes und eine Aufsetzkraft der Aufsetzkalotte auf die zu messende Schicht.

Aus der DE 196 49 515 A1 ist eine Vorrichtung zur Messung der Dicke dünner Schichten bekannt. Diese Vorrichtung umfasst einen Tragarm, an dessen Ende eine Messsonde vorgesehen ist, die auf einer Messoberfläche aufsetzbar ist. Gegenüberliegend ist eine Dämpfungsvorrichtung am Tragarm mit einer Lagervorrichtung für den Tragarm vorgesehen, wobei die Lagervorrichtung ein Dämpfungsmittel umfasst, dessen beiden Enden quer zur Schwenkebene an je einem Lagerblock befestigt sind.

Aus der US 3 975 829 A geht eine Messvorrichtung für mechanische Werkstücke hervor. Diese Messvorrichtung umfasst eine Messsonde, welche auf einer Messoberfläche aufsetzbar ist. Diese Messsonde umfasst ein Federelement zur Kontaktierung der Messsonde mit dem Messgegenstand. Des Weiteren ist in Reihe dazu geschalten ein Dämpfungselement, welches eine Dämpfungsflüssigkeit umfasst, sowie eine Spulenvorrichtung für eine Signalerfassung vorgesehen.

Des Weiteren sind Sensorelemente sowohl aus der DE 100 14 348 B4, der DE 20 2010 006 062, der DE 10 2011 103 122 A1 als auch der DE 10 2011 103 123 A1 bekannt.

Die Anforderungen an die Genauigkeit zur Messung der Dicke dünner Schichten, die im Bereich von wenigen Mikrometern, insbesondere unter 10 µm, liegt, steigt stetig an. Beispielsweise ist es erforderlich, Chromschichten auf Kupfer- oder Zinkschichten zu messen, die auf einem Grundkörper aus Stahl aufgebracht sind, wobei die Chromschichten beispielsweise weniger als 10 µm aufweisen. Solche Schichtaufbauten werden beispielsweise bei Druckzylindern, insbesondere Tiefdruckzylindern, verwendet, welche zur Herstellung von bedruckten Papierbögen eingesetzt werden. Die Messung von solchen auf Tiefdruckzylindern aufgebrachten Schichtdicken ist aufwändig. Darüber hinaus sind solche Schichtaufbauten druckempfindlich, und die durch eine Messsonde beim Aufsetzen auf die Messoberfläche eingebrachten Druckstellen beeinflussen die präzise Messung der Schichtdicke.

Der Erfindung liegt deshalb die Aufgabe zugrunde, eine Messsonde zur Messung der Dicke dünner Schichten zu schaffen, welche ein taktiles Messen der Dicke dünner Schichten ohne Deformation der Messoberfläche an der Messstelle ermöglicht.

Diese Aufgabe wird durch eine Messsonde gelöst, bei welcher eine in Aufsetzrichtung des Sensorelementes wirkende Dämpfungseinrichtung vorgesehen ist, welche die Aufsetzbewegung des Sensorelementes auf die Messoberfläche eines Messgegenstandes dämpft oder kontrolliert verzögert. Dadurch wird ein sanftes Aufsetzen des Sensorelementes mit der Aufsetzkalotte unmittelbar auf die Messoberfläche an der Messstelle ermöglicht. Deformationen oder Eindellungen an der Messstelle werden vermieden, wodurch die Schichtdicke oder Schichtdicken in der aufgebrachten Form - also ohne Deformation - verbleiben und mit hoher Präzision die tatsächlich vorhandene Schichtdicke oder Schichtdicken ermittelt werden können.

Die Messsonde sieht bevorzugt vor, dass die Dämpfungseinrichtung getrennt zu dem zumindest einen Sensorelement angeordnet ist, insbesondere eine räumliche Trennung des zumindest einen Sensorelementes zur Dämpfungseinrichtung vorgesehen ist. Durch die räumliche Trennung der Dämpfungseinrichtung zum zumindest einen Sensorelement und die daraus resultierende unabhängige Funktionsweise zwischen der Dämpfungseinrichtung und dem Sensorelement wird ein einfacher und flexibler Aufbau der Messsonde erreicht. Die Dämpfungseinrichtung kann in dem Gehäuse des zumindest einen Sensorelementes oder auch außerhalb des Gehäuses vorgesehen sein.

Die Dämpfungseinrichtung der Messsonde umfasst einen Stößel, der entgegen einer Aufsetzrichtung der Messsonde auf die Messoberfläche in ein Dämpfungsglied eintaucht, wobei dessen Eintauchgeschwindigkeit konstant ist oder mit zunehmendem Eintauchweg abnimmt. Dadurch wird die Geschwindigkeit in Aufsetzrichtung des Sensorelements reduziert, wobei mit zunehmender Annäherung des Sensorelementes an die Messoberfläche eine Geschwindigkeitsreduzierung erzielt und ein sanftes Aufsetzen ermöglicht ist.

Die Dämpfungseinrichtung umfasst vorteilhafterweise ein mechanisches Dämpfungsglied und ist vorzugsweise als Hubkolbenzylinder ausgebildet. Dadurch lassen sich kleine und kompakt bauende Dämpfungsglieder einsetzen.

Das mechanische Dämpfungsglied umfasst als Dämpfungsmedium ein Fluid, wobei vorzugsweise ein Öl als Dämpfungsmedium eingesetzt wird. Alternativ können auch ein Gel oder Wasser eingesetzt werden. Als Dämpfungsmedium kann auch ein Gas, wie beispielsweise Luft, vorgesehen sein.

Nach einer alternativen Ausgestaltung der Dämpfungseinrichtung ist ein elektromagnetisches Dämpfungsglied vorgesehen. Dabei wird bevorzugt eine Wirbelstromdämpfung eingesetzt.

Des Weiteren ist bevorzugt vorgesehen, dass die Eintauchbewegung des Stößels der Dämpfungseinrichtung wenigstens zum Aufsetzzeitpunkt des Sensorelementes parallel zur Aufsetzrichtung des Sensorelements ist. Dadurch kann ein verkippungsfreies Aufsetzen des Sensorelementes ermöglicht sein.

Die zumindest eine Dämpfungseinrichtung nimmt am Stößel einen Aufsetzfuß auf, der gegenüber der Aufsetzkalotte des zumindest einen Sensorelementes in Aufsetzrichtung hervorsteht. Dadurch wird beim Annähern der Messsonde zunächst der Aufsetzfuß, der vorzugsweise als Gummifuß oder dergleichen ausgebildet ist, auf die Messoberfläche aufgesetzt, so dass bei anschließendem Absenken der Messsonde zum Zuführen des Sensorelementes auf die Messoberfläche sich eine zunehmende Dämpfungswirkung einstellt.

Bevorzugt ist die Eintauchbewegung des Stößels in das Dämpfungsglied parallel zur Eintauchbewegung des zumindest einen Sensorelementes im Gehäuse oder einer Hülse vorgesehen. Durch die Achsparallelität können des Weiteren ein konstruktiv einfacher Aufbau als auch eine einfache Bedienung und Handhabung ermöglicht sein.

Die Dämpfungseinrichtung ist gemäß einer Alternative in das das Sensorelement aufnehmende Gehäuse integriert. Dadurch kann eine kompakte Messsonde geschaffen werden.

Das Sensorelement ist bevorzugt federgelagert zum Gehäuse aufgenommen. Dadurch kann verhindert werden, dass das Sensorelement mit einer zu starken Aufsetzkraft auf die Messoberfläche aufgebracht wird. Andererseits wird durch die Federlagerung erzielt, dass ein Mindestanpressdruck auf das Sensorelement wirkt, so dass eine gesicherte Auflage des Sensorelementes auf der Messoberfläche an der Messstelle des Messgegenstandes ermöglicht ist.

Eine alternative Ausgestaltung der Messsonde sieht vor, dass das zumindest eine Sensorelement fest im Gehäuse angeordnet und dem Sensorelement zumindest ein Hilfspol zugeordnet ist. Bei dieser Ausführungsform greift bei einer Aufsetzbewegung der Messsonde zunächst die Dämpfungseinrichtung an der Messoberfläche des Messgegenstandes an, um eine gedämpfte und/oder verzögerte Aufsetzbewegung der Messsonde auf der Messoberfläche zu erzielen. Durch den zumindest einen Hilfspol kann eine verkippungsfreie Anordnung des Sensorelementes auf einer Messoberfläche ermöglicht sein. Insbesondere sind zwei Hilfspole vorgesehen, so dass zusammen mit dem Sensorelement eine Dreipunktauflage gegeben ist.

Eine weitere alternative Ausführungsform der Erfindung sieht vor, dass die Dämpfungseinrichtung an einer am Gehäuse vorgesehenen oder anbringbaren Aufnahme lösbar befestigt ist. Dadurch sind in einfacher Weise verschiedene Dämpfungselemente anbringbar.

Eine alternative Ausführungsform der Messsonde sieht vor, dass das Sensorelement in einer nach unten offenen Aufsetzhülse angeordnet ist, in welcher das Sensorelement eintauchbar ist, wobei die Hülse an einem ersten oder weiteren Gehäuseabschnitt des Gehäuses fest angeordnet ist, an welchem der Stößel der Dämpfungseinrichtung sowie ein zweiter oder oberer Gehäuseabschnitt fest an dem Dämpfungsglied und dem Sensorelement angreifen. Bei dieser Ausführungsform wird zunächst eine Hülse des Sensorelementes auf der Messoberfläche aufgebracht und anschließend die unmittelbar auf die Messoberfläche aufsetzende Aufsetzbewegung des Sensorelementes durch die Dämpfungseinrichtung gedämpft.

Bei der Messsonde zur Messung der Dicke dünner Schichten können Sensorelemente eingesetzt werden, bei denen zumindest ein Messelement als Spule und/oder als Hallsensor ausgebildet ist, welche zur Messung der Schichtdicke nach dem magnetinduktiven Verfahren und/oder nach dem Wirbelstromverfahren, nach dem phasensensitiven Verfahren oder nach einem magnetischen Gleichfeldverfahren arbeiten. Denkbar sind auch kapazitive Sensoren.

Die Erfindung ist durch die beigefügten Ansprüche definiert.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Schnittansicht einer ersten erfindungsgemäßen Ausführungsform,
- Figur 2: eine schematische Schnittansicht einer alternativen Ausführungsform zu Figur 1,
- Figur 3: eine schematische Ansicht von unten auf die Ausführungsform gemäß Figur 2,
- Figuren 4a und 4b: schematische Schnittansichten einer weiteren alternativen Ausführungsform in zwei verschiedenen Arbeitspositionen.

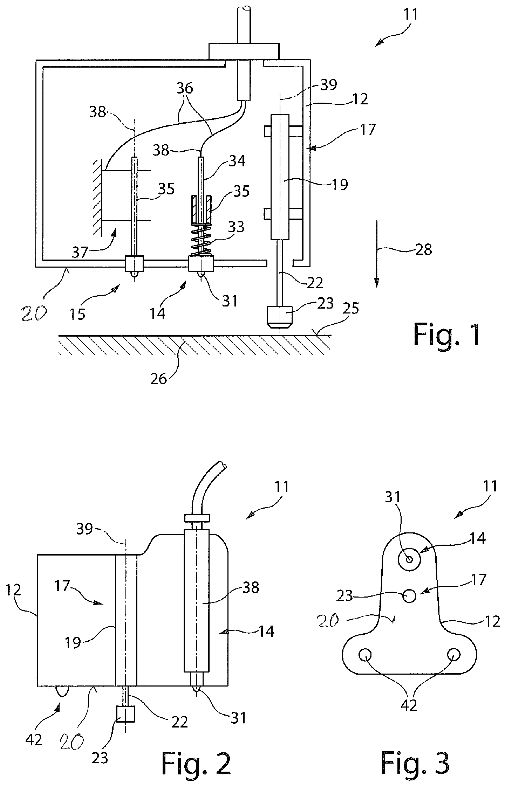

In Figur 1 ist schematisch eine erste Ausführungsform der erfindungsgemäßen Messsonde 11 dargestellt. Diese Messsonde 11 umfasst ein Gehäuse 12, in welchem zumindest ein Sensorelement 14, 15 sowie zumindest eine Dämpfungseinrichtung 17 vorgesehen sind, wobei das zumindest eine Sensorelement 14, 15 zu dem Gehäuse 12 beziehungsweise zu einer Gehäusewand 20 des Gehäuses 12 zumindest teilweise hervorstehend angeordnet ist. Die Sensorelemente 14, 15 sind bevorzugt derselben Gehäusewand 20 am Gehäuse 12 zugeordnet. Die Dämpfungseinrichtung 17 ist beispielsweise vollständig in dem Gehäuse 12 integriert. Alternativ kann diese auch teilweise oder vollständig außerhalb des Gehäuses 12 angeordnet, insbesondere lösbar befestigt, sein.

Die Dämpfungseinrichtung 17 umfasst ein mechanisches Dämpfungsglied 19, welches gemäß dem Ausführungsbeispiel als Hubkolbenzylinder ausgebildet ist, in dem ein Stößel 22 eintauchbar geführt ist. Am freien Ende des Stößels 22 ist ein Aufsetzfuß 23 vorgesehen, der gegenüber dem Gehäuse 12 beziehungsweise der Gehäusewand 20 weiter hervorsteht als das zumindest eine teilweise hervorstehende Sensorelement 14, 15. Dieser Aufsatzfuß 23 kann beispielsweise aus einem weichen Kunststoffmaterial ausgebildet sein.

Die Dämpfungseinrichtung 17 umfasst gemäß einer ersten Ausführungsform als Dämpfungsmedium ein Fluid, insbesondere Öl. Alternativ kann auch ein Gel, Wasser oder Luft eingesetzt werden. Alternativ kann die Dämpfungseinrichtung auch als Wirbelstrombremse ausgebildet sein.

Bei der Dämpfungseinrichtung 17 erfolgt mit zunehmender Eintauchbewegung des Stößels 22 in das Dämpfungsglied 19 eine Verzögerung in der Eintauchgeschwindigkeit, das heißt, dass nach dem Aufsetzen des Aufsetzfußes 23 auf einer Messoberfläche 25 eines Messgegenstandes 26 eine Zustellgeschwindigkeit des Gehäuses 12 in Aufsetzrichtung 28 zunehmend verringert wird. Unmittelbar vor dem Aufsetzen des zumindest einen Sensorelementes 14, 15 auf der Messoberfläche 25 wird die Hubbewegung in Aufsetzrichtung 28 am Stärksten verzögert.

Alternativ kann die Dämpfungseinrichtung 17 auch eine über den Hubweg konstante Dämpfung aufweisen.

Das zumindest eine Sensorelement 14, 15 ist gemäß einer ersten Ausführungsform relativ zum Gehäuse 12 nachgiebig gelagert. Beim unmittelbaren Aufsetzen einer zur Messoberfläche 25 weisenden Aufsetzkalotte 31 des Sensorelementes 14, 15 auf die Messoberfläche 25 des Messgegenstandes 26, kann das Sensorelement 14, 15 zumindest geringfügig in das Gehäuse 12 eintauchen.

Die relativ zum Gehäuse 12 nachgiebige Lagerung der Sensorelemente 14, 15 kann vielfältig sein. Es sind beispielhaft zwei Lagerarten dargestellt, wobei die Lagerung des zumindest einen Sensorelementes 14, 15 hierauf nicht beschränkt ist.

Beim Sensorelement 14 ist beispielsweise eine nachgiebige Lagerung mit einer Rückstellfeder 33 dargestellt, welche einen Schaft 34 umgibt, der in einer Buchse 35 geführt ist.

Beim Sensorelement 15 ist beispielsweise eine Federlagerung durch zwei parallel zueinander ausgerichteten Blattfederelementen 37 vorgesehen, um eine Nachgiebigkeit anzusteuern.

Das zumindest eine Sensorelement 14, 15 ist jeweils über eine elektrische Anschlussleitung 36 mit einer nicht näher dargestellten Messeinrichtung verbunden, welche die erfassten Messwerte aufnimmt und als ermittelte Daten ausgibt und/oder weiterverarbeitet und/oder auf einem Display anzeigt.

Die Längsachse 38 des zumindest einen Sensorelementes 14, 15 ist vorteilhafterweise parallel zur Längsachse 39 der Dämpfungseinrichtung 17 ausgerichtet, so dass die Bewegungsrichtungen des zumindest einen Sensorelementes 14, 15 und des Stößels 22 der Dämpfungseinrichtung 17 parallel zur Aufsetzrichtung 28 sind.

In Abhängigkeit der Beschichtung des Messgegenstandes sowie des Grundwerkstoffs des Messgegenstandes 26 sind die einzelnen Sonden ausgewählt und angepasst. Beispielsweise kann eine Messsonde gemäß der DE 100 14 348 B4 eingesetzt werden. Des Weiteren können Messsonden gemäß der DE 10 2011 103 122 A1, der DE 10 2011 103 123 A1 und der DE 10 2005 054 593 A1 als auch Messsonden gemäß der DE 20 2010 006 062 U1 eingesetzt werden.

Beispielsweise kann das Sensorelement 14 als Messelement eine erste und eine zweite Spulenvorrichtung mit zumindest jeweils einer Spule aufweisen. Solche Sensorelemente ermöglichen eine Messung nach dem magnetinduktiven Verfahren. Das magnetinduktive Messverfahren eignet sich zur Messung der Dicke von Nicht-Eisenmetallschichten, wie beispielsweise Chrom, Kupfer, Zink oder dergleichen auf magnetisierbaren Grundwerkstoffen, wie beispielsweise Stahl und Eisen als auch für Farb-, Lack- und Kunststoffschichten auf magnetisierbaren Grundstoffen, wie beispielsweise Stahl und Eisen. Der Messbereich liegt beispielsweise bei einer Schichtdicke von wenigen Mikrometern bis zu 1.800 µm, wobei bevorzugt eine Frequenz von weniger als 300 Hz verwendet wird. Ein solches Sensorelement ermöglicht auch die Durchführung der Messung nach dem Wirbelstromverfahren, das heißt, dass die Messung der Dicke von elektrisch nichtleitenden Schichten auf Nicht-Eisenmetallen, wie beispielsweise Farben, Lacken, Kunststoffen auf Aluminium, Kupfer, Messing, Edelstahl oder anodisierten Schichten auf Aluminium in einem hochfrequenten Wechselfeld ermöglicht ist. Eine solche Sonde kann als duale Messsonde eingesetzt werden.

Des Weiteren kann das zumindest eine Sensorelement 14, 15 mit einer ersten die Längsachse 38 umgebenden Spule eine Schichtdicke und mit einer zweiten Spule, welche die erste Spule umgibt, auch eine Krümmung der Messoberfläche des Messgegenstandes erfasst und bei der Berechnung der Schichtdicke kompensiert werden. Insbesondere bei gekrümmten Oberflächen, wie beispielsweise bei beschichteten Walzen oder dergleichen, kann die Messung der Schichtdicke präzisiert werden. Des Weiteren kann das zumindest eine Sensorelement 14, 15 nur einen Hallsensor oder zumindest eine Spule und einen Hallsensor umfassen.

Die in Figur 1 dargestellte Messsonde 11 kann beispielsweise manuell auf einen Messgegenstand 26 aufgesetzt werden, wobei zunächst der Aufsetzfuß 23 der Dämpfungseinrichtung 17 und anschließend durch die Dämpfungseinrichtung 17 gedämpft das zumindest eine Sensorelement 14, 15 auf die Messoberfläche 25 aufgesetzt wird. Alternativ kann dieses Gehäuse 12 der Messsonde 11 an einem Stativ montiert und manuell oder motorisch auf den Messgegenstand 26 zugeführt werden. Des Weiteren kann die Messsonde 11 anstelle eines Stativs auch an einer Halterung oder einer Station mit einem prismaförmigen Fuß befestigt sein, so dass die Messsonde 11 auch auf einem Messgegenstand 26 mit einer gekrümmten Messoberfläche aufgesetzt werden kann, um anschließend eine Messung an bestimmten Messstellen am Messgegenstand 26 durchzuführen, wobei die Zuführung des Sensorelementes 14, 15 beziehungsweise des Gehäuses 12 in Aufsetzrichtung 28 zur Messstelle wiederum manuell oder motorisch erfolgen kann.

Bei der Anordnung von beispielsweise zwei Sensorelementen 14, 15 in einer Messsonde 11 können Messaufgaben für einen Schichtaufbau durchgeführt werden, der beispielsweise drei Beschichtungen auf einem Grundkörper aufweist. Beispielsweise kann eine oberste Schicht Chrom sein, darunterliegend eine Zinkschicht und diese wiederum auf einer Kupferschicht aufliegen, wobei die Kupferschicht auf einem Grundkörper aus Stahl aufgebracht ist. Zusätzlich kann durch das zumindest eine Sensorelement 14, 15 auch eine Krümmungskompensation durchgeführt werden. Dies ist insbesondere dann erforderlich, wenn ein solcher Schichtaufbau auf einer Walze, insbesondere einer Druckwalze, aufgebracht ist.

Die in Figur 1 dargestellte Ausführungsform der Messsonde 11 kann auch dahingehend abgewandelt werden, dass nur ein Sensorelement als auch drei oder auch mehrere Sensorelemente gleicher und/oder unterschiedlicher Bauart in dem Gehäuse 12 vorgesehen sind.

In Figur 2 ist eine alternative Ausführungsform der Messsonde 11 in einer schematischen Seitenansicht und in Figur 3 in einer Ansicht von unten dargestellt. Bei dieser Ausführungsform der Messsonde 11 sind in dem Gehäuse 12 das Sensorelement 14 und die Dämpfungseinrichtung 17 angeordnet. An einer Unterseite 41 des Gehäuses 12 sind zumindest einer, vorzugsweise zwei Hilfspole 42 im Abstand zueinander angeordnet. Das Sensorelement 14 bildet einen dritten Pol 31, so dass eine dreipolige Auflage der Messsonde 12 auf der Messoberfläche 25 des Messgegenstandes 26 gegeben ist. Bei dieser Ausführungsform ist das Sensorelement 14 fest in dem Gehäuse 12 angeordnet.

Die Dämpfungseinrichtung 17 ist vorteilhafterweise innerhalb einer durch die drei Pole 42, 31 gebildeten Fläche angeordnet. Die Längsachse 38 des Sensorelementes 14 und die Längsachse 39 der Dämpfungseinrichtung 17 sind vorzugsweise wiederum parallel zueinander ausgerichtet. Der Aufsetzfuß 23 steht vorteilhafterweise gegenüber der Aufsetzkalotte 31 des Sensorelementes 14 in Aufsetzrichtung 28 gesehen hervor. Alternativ kann die Dämpfungseinrichtung 17 auch separat an einer Außenseite des Gehäuses 12 befestigbar sein.

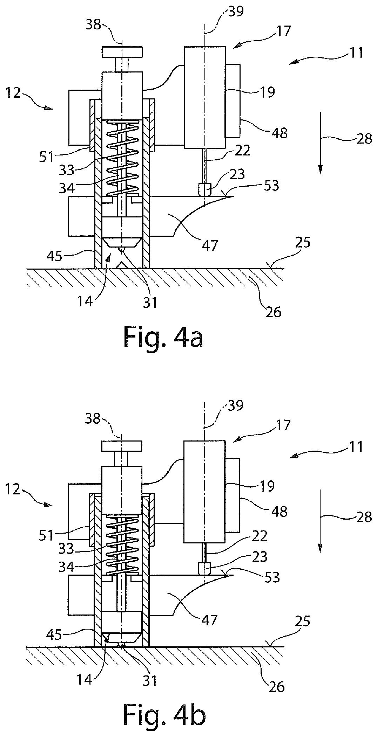

In den Figuren 4a und 4b ist eine schematische Schnittdarstellung einer alternativen Ausführungsform der Messsonde 11 zu den vorstehenden Figuren 1 bis 3 dargestellt. Diese Messsonde 11 umfasst ein Sensorelement 14, welches in einer nach unten offenen Hülse 45 bewegbar gelagert ist. Ein solcher Aufbau eines Sensorelementes 14 ist beispielsweise aus der DE 100 14 348 B4 bekannt. Das Gehäuse 12 der Messsonde ist zweiteilig ausgebildet und weist einen unteren Abschnitt 47 auf, welcher fest am Außenumfang der Hülse 45 angreift. Ein oberer Abschnitt 48 des Gehäuses 12 ist fest an einer Führungshülse 51 vorgesehen, welche die Hülse 45 umgibt und das Sensorelement 14 innerhalb der Hülse 45 auf und ab bewegt. An dem oberen Gehäuseabschnitt 48 ist des Weiteren die Dämpfungseinrichtung 17 befestigt, welche mit dem Stößel 22 und dem Aufsetzfuß 23 sich an einer Anlagefläche 53 am unteren Gehäuseabschnitt 47 abstützt. Daraus ergibt sich folgende Funktionsweise:
Zunächst wird die Messsonde 11 gemäß Figur 4a in Aufsetzrichtung 28 auf die Messoberfläche 25 des Messgegenstandes 26 zugeführt, so dass die Hülse 45 zur Anlage auf der Messoberfläche 25 kommt. Das Sensorelement 14 mit dessen Aufsetzkalotte 31 ist gegenüber der Messstelle selbst noch abgehoben. Anschließend wird der obere Gehäuseabschnitt 48 in Aufsetzrichtung 28 weiter auf den unteren Gehäuseabschnitt 47 zubewegt, wobei die Dämpfungseinrichtung 17 die dadurch eingeleitete Absenkbewegung des Sensorelementes 14 über die Führungshülse 51 unmittelbar auf die Messoberfläche 25 reduziert beziehungsweise verzögert. Dadurch kann ein sanftes Aufsetzen der Aufsetzkalotte 31 des Sensorelementes 14 an der Messstelle des Messgegenstandes 26 erfolgen, wie dies in Figur 4b dargestellt ist. Die Hülse 45 taucht dabei in die Führungshülse 51 ein, wobei sich gleichzeitig auch der Abstand zwischen dem oberen und unteren Gehäuseabschnitt 47, 48 reduziert.

Nach der Durchführung der Messung wird die Messsonde 11 von der Messoberfläche 25 des Messgegenstandes 26 abgehoben, wobei die Rückstellfeder 33 das Sensorelement 17 gegenüber einer aufsetzseitigen Stirnseite der Hülse 45 zurück verschiebt, so dass das Sensorelement 14 in die Hülse 45 eintaucht und gesichert vor Beschädigungen positioniert wird.

Alle vorgenannten Merkmale sind jeweils für sich erfindungswesentlich und können beliebig miteinander kombinierbar sein. Die Erfindung ist jedoch durch die beigefügten Ansprüche definiert.

## Patentansprüche

1. Messsonde zur Messung der Dicke dünner Schichten mit einem Gehäuse (12) und mit zumindest einem Sensorelement (14, 15), welches mit zumindest einem Federelement (33, 37) nachgiebig zum Gehäuse (12) gelagert ist und entgegen der Aufsetzrichtung und in dessen Längsachse (38) zur Messoberfläche (25) eines Messgegenstandes (26) weisend eine Aufsetzkalotte (31) aufweist, wobei an dem Gehäuse (12) eine Dämpfungseinrichtung (17) vorgesehen ist, welche in Aufsetzrichtung (28) des zumindest einen Sensorelementes (14, 15) wirkt, bevor das Sensorelement (14, 15) auf die Messoberfläche (25) des Messgegenstandes (26) aufsetzt und die Aufsetzbewegung des zumindest einen Sensorelementes (14, 15) in Richtung auf die Messoberfläche (25) des Messgegenstandes (26) dämpft, **dadurch gekennzeichnet, dass** die Dämpfungseinrichtung (17) einen Aufsetzfuß (23) aufweist, der gegenüber der Aufsetzkalotte (31) des zumindest einen Sensorelements (14, 15) in Aufsetzrichtung (28) hervorsteht, sodass beim Annähern der Messsonde zumindest der Aufsetzfuß (23) auf die Messoberfläche (25) aufsetzt.

2. Messsonde nach Anspruch 1, **dadurch gekennzeichnet, dass** die Dämpfungseinrichtung (17) getrennt zu dem zumindest einen Sensorelement (14, 15) insbesondere räumlich getrennt, angeordnet ist.

3. Messsonde nach Anspruch 1, **dadurch gekennzeichnet, dass** die Dämpfungseinrichtung (17) einen Stößel (22) aufweist, dessen Eintauchgeschwindigkeit in ein Dämpfungsglied (19) mit zunehmendem Eintauchweg konstant bleibt oder abnimmt.

4. Messsonde nach Anspruch 1, **dadurch gekennzeichnet, dass** die Dämpfungseinrichtung (17) ein mechanisches Dämpfungsglied (19) umfasst und vorzugsweise als Hubkolbenzylinder ausgebildet ist.

5. Messsonde nach Anspruch 1, **dadurch gekennzeichnet, dass** das mechanische Dämpfungsglied (19) als Dämpfungsmedium ein Fluid oder Gas, insbesondere Öl, Luft, Gel oder Wasser, aufweist.

6. Messsonde nach Anspruch 1, **dadurch gekennzeichnet, dass** die Dämpfungseinrichtung (17) ein elektromagnetisches Dämpfungsglied aufweist und vorzugsweise als Wirbelstromdämpfung ausgebildet ist.

7. Messsonde nach Anspruch 3, **dadurch gekennzeichnet, dass** die Eintauchbewegung des Stößels (22) der Dämpfungseinrichtung (17) wenigstens zum Aufsetzzeitpunkt des zumindest einen Sensorelementes (14, 15) auf der Messoberfläche (25) parallel zur Aufsetzrichtung (28) des zumindest einen Sensorelementes (14, 15) ist.

8. Messsonde nach Anspruch 1, **dadurch gekennzeichnet, dass** das zumindest eine Sensorelement (14, 15) entgegen der Aufsetzrichtung (28) verschiebbar im Gehäuse (12) und vorzugsweise die Eintauchbewegung des Stößels (22) der Dämpfungseinrichtung (17) parallel zur Eintauchbewegung des zumindest einen Sensorelementes (14, 15) im Gehäuse (12) vorgesehen sind.

9. Messsonde nach Anspruch 1, **dadurch gekennzeichnet, dass** die Dämpfungseinrichtung (17) in dem das zumindest eine Sensorelement (14, 15) aufweisenden Gehäuse (12) angeordnet ist.

10. Messsonde nach Anspruch 1, **dadurch gekennzeichnet, dass** das zumindest eine Sensorelement (14, 15) fest in dem Gehäuse (12) aufgenommen und zumindest ein Hilfspol (42) am Gehäuse (12) dem zumindest einen Sensorelement (14, 15) zugeordnet ist.

11. Messsonde nach Anspruch 1, **dadurch gekennzeichnet, dass** die Dämpfungseinrichtung (17) an einer am Gehäuse (12) angeordneten oder anbringbaren Aufnahme lösbar befestigt ist.

12. Messsonde zur Messung der Dicke dünner Schichten mit einem Gehäuse (12) und mit zumindest einem Sensorelement (14, 15), welches mit zumindest einem Federelement (33, 37) nachgiebig zum Gehäuse (12) gelagert ist und entgegen der Aufsetzrichtung und in dessen Längsachse (38) zur Messoberfläche (25) eines Messgegenstandes (26) weisend eine Aufsetzkalotte (31) aufweist, wobei an dem Gehäuse (12) eine Dämpfungseinrichtung (17) vorgesehen ist, welche in Aufsetzrichtung (28) des zumindest einen Sensorelementes (14, 15) wirkt, bevor das Sensorelement (14, 15) auf die Messoberfläche (25) des Messgegenstandes (26) aufsetzt und die Aufsetzbewegung des zumindest einen Sensorelementes (14, 15) in Richtung auf die Messoberfläche (25) des Messgegenstandes (26) dämpft, **dadurch gekennzeichnet, dass** das Sensorelement (14, 15) in einer Hülse (45) eintauchbar angeordnet ist, wobei die Hülse (45) an einem unteren Gehäuseabschnitt (47) des Gehäuses (12) angeordnet ist, an welcher ein Stößel (22) der Dämpfungseinrichtung (17) angreift und ein oberer Gehäuseabschnitt (48) des Gehäuses (12) fest an der Dämpfungseinrichtung (17) und an einer das Sensorelement (14, 15) aufnehmenden Führungshülse (51) angreift, sodass zunächst die Hülse (45) des Sensorelements (14, 15) auf der Messoberfläche (25) aufgebracht und anschließend die unmittelbar auf die Messoberfläche (25) aufsetzende Aufsetzbewegung des Sensorelements (14, 15) durch die Dämpfungseinrichtung (17) gedämpft ist.

13. Messsonde nach einem der vorhergehenden Ansprüche, **dadurch gekennzeichnet, dass** das zumindest eine Messelement des Sensorelementes eine Spule und/oder einen Hallsensor umfasst und das Sensorelement (14, 15) zur Messung der Dicke dünner Schichten nach dem magnetinduktiven Verfahren und/oder nach dem Wirbelstromverfahren, nach dem phasensensitiven Verfahren oder nach einem magnetischen Gleichfeldverfahren ausgebildet ist.

## Claims

1. Measuring probe for the measurement of the thickness of thin layers, having a housing (12) and having at least one sensor element (14, 15) which is mounted with at least one spring element (33, 37) to be flexible with respect to the housing (12) and has a spherical positioning cap (31) pointing towards the measuring surface (25) of an object of measurement (26) against the touchdown direction and in the longitudinal axis (38) thereof, wherein an attenuating device (17) is provided on the housing (12) which acts in the touchdown direction (28) of the at least one sensor element (14, 15) before the sensor element (14, 15) is fitted onto the measuring surface (25) of the object of measurement (26) and attenuates the touchdown movement of the at least one sensor element (14, 15) in the direction of the measuring surface (25) of the object of measurement (26), **characterised in that** the attenuating device (17) has a touchdown foot (23) which protrudes in the touchdown direction (28) compared to the spherical positioning cap (31) of the at least one sensor element (14, 15), so during approaching of the measuring probe at least the touchdown foot (23) touches onto the measuring surface (25).

2. Measuring probe according to claim 1, **characterised in that** the attenuating device (17) is arranged separately to the at least one sensor element (14, 15), in particular spatially separately.

3. Measuring probe according to claim 1, **characterised in that** the attenuating device (7) has a ram (22), the immersion speed of which into an attenuator (19) remains constant or decreases with increasing immersion distance.

4. Measuring probe according to claim 1, **characterised in that** the attenuating device (17) comprises a mechanical attenuator (19) and is preferably formed as a reciprocating cylinder.

5. Measuring probe according to claim 1, **characterised in that** the mechanical attenuator (19) has a liquid or gas as an attenuating medium, in particular oil, air, gel or water.

6. Measuring probe according to claim 1, **characterised in that** the attenuating device (17) has an electromagnetic attenuator and is preferably formed as an eddy current attenuator.

7. Measuring probe according to claim 3, **characterised in that** the immersion movement of the ram (22) of the attenuating device (17) is parallel to the touchdown direction (28) of the at least one sensor element (14, 15) at least at the point in time of touchdown of the at least one sensor element (14, 15) onto the measuring surface (25).

8. Measuring probe according to claim 1, **characterised in that** the at least one sensor element (14, 15) is provided to be displaceable against the touchdown direction (28) in the housing (12) and preferably the immersion movement of the ram (22) of the attenuating device (17) is provided in parallel to the immersion movement of the at least one sensor element (14, 15) in the housing (12).

9. Measuring probe according to claim 1, **characterised in that** the attenuating device (17) is arranged in the housing (12) having the at least one sensor element (14, 15).

10. Measuring probe according to claim 1, **characterised in that** the at least one sensor element (14, 15) is received fixedly in the housing (12) and at least one auxiliary pole (42) on the housing (12) is allocated to the at least one sensor element (14, 15) .

11. Measuring probe according to claim 1, **characterised in that** the attenuating device (17) is fastened releasably to a receiver which is arranged or able to be installed on the housing (12).

12. Measuring probe for the measurement of the thickness of thin layers, having a housing (12) and having at least one sensor element (14, 15) which is mounted with at least one spring element (33, 37) to be flexible with respect to the housing (12) and has a spherical positioning cap (31) pointing towards the measuring surface (25) of an object of measurement (26) against the touchdown direction and in the longitudinal axis (38) thereof, wherein an attenuating device (17) is provided on the housing (12) which acts in the touchdown direction (28) of the at least one sensor element (14, 15) before the sensor element (14, 15) is fitted onto the measuring surface (25) of the object of measurement (26) and attenuates the touchdown movement of the at least one sensor element (14, 15) in the direction of the measuring surface (25) of the object of measurement (26), **characterised in that** the sensor element (14, 15) is arranged to be able to be immersed in a sleeve (45), wherein the sleeve (45) is arranged on a lower housing section (47) of the housing (12), with which a ram (22) of the attenuating device (17) is brought into contact and an upper housing section (48) of the housing (12) is brought into firm contact with the attenuating device (17) and a guide sleeve (51) which receives the sensor element (14, 15), so firstly the sleeve (45) of the sensor element (14, 15) is positioned on the measuring surface (25) and following directly, the touchdown movement of the sensor element (14, 15) on the measuring surface (25) is attenuated by the attenuation device (17).

13. Measuring probe according to one of the preceding claims, **characterised in that** the at least one measuring element of the sensor element comprises a coil and/or a Hall sensor and the sensor element (14, 15) for measuring the thickness of thin layers is formed according to the magnetic-induction method and/or according to the eddy current method, according to the phase-sensitive method or according to a magnetic DC field method.

## Revendications

1. Sonde de mesure destinée à mesurer l'épaisseur de couches minces, pourvue d'un boîtier (12) et d'au moins un élément capteur (14, 15) qui est monté de manière flexible par rapport au boîtier (12) grâce à au moins un élément ressort (33, 37) et qui présente, dans le sens inverse au sens de positionnent et dans son axe longitudinal (38), une calotte de positionnement (31) tournée vers la surface de mesure (25) d'un objet de mesure (26), sur le boîtier (12) étant prévu un dispositif amortisseur (17) qui agit dans le sens de positionnement (28) dudit au moins un élément capteur (14, 15) avant que l'élément capteur (14, 15) ne se pose sur la surface de mesure (25) de l'objet de mesure (26) et amortit ainsi le mouvement de positionnement effectué par ledit au moins un élément capteur (14, 15) en direction de la surface de mesure (25) de l'objet de mesure (26), **caractérisée en ce que** le dispositif amortisseur (17) présente un pied de positionnement (23) qui fait saillie dans le sens de positionnement (28) par rapport à la calotte de positionnement (31) dudit au moins un élément capteur (14, 15) de sorte que lorsque que la sonde de mesure s'approche, au moins le pied de positionnement (23) se pose sur la surface de mesure (25).

2. Sonde de mesure selon la revendication 1, **caractérisée en ce que** le dispositif amortisseur (17) est disposé de manière séparée, en particulier de manière séparée dans l'espace, par rapport audit au moins un élément capteur (14, 15).

3. Sonde de mesure selon la revendication 1, **caractérisée en ce que** le dispositif amortisseur (17) présente une tige (22) dont la vitesse d'immersion dans un élément amortisseur (19) reste constante ou diminue avec l'augmentation de la distance d'immersion.

4. Sonde de mesure selon la revendication 1, **caractérisée en ce que** le dispositif amortisseur (17) comprend un élément amortisseur (19) mécanique et est réalisé de préférence en tant que piston-cylindre.

5. Sonde de mesure selon la revendication 1, **caractérisée en ce que** l'élément amortisseur (19) mécanique présente en tant que fluide amortisseur un liquide ou un gaz, en particulier de l'huile, de l'air, du gel ou de l'eau.

6. Sonde de mesure selon la revendication 1, **caractérisée en ce que** le dispositif amortisseur (17) présente un élément amortisseur électromagnétique et est réalisé de préférence en tant qu'amortissement par courant de Foucault.

7. Sonde de mesure selon la revendication 3, **caractérisée en ce que** le mouvement d'immersion de la tige (22) du dispositif amortisseur (17) est parallèle au sens de positionnement (28) dudit au moins un élément capteur (14, 15) au moins au moment où ledit au moins un élément capteur (14, 15) se pose sur la surface de mesure (25).

8. Sonde de mesure selon la revendication 1, **caractérisée en ce que** ledit au moins un élément capteur (14, 15) est prévu dans le boîtier (12) de manière à pouvoir être déplacé dans le sens inverse au sens de positionnement (28), et **en ce que** de préférence le mouvement d'immersion de la tige (22) du dispositif amortisseur (17) est prévu dans le boîtier (12) de manière à être parallèle au mouvement d'immersion dudit au moins un élément capteur (14, 15).

9. Sonde de mesure selon la revendication 1, **caractérisée en ce que** le dispositif amortisseur (17) est disposé dans le boîtier (12) qui présente ledit au moins un élément capteur (14, 15).

10. Sonde de mesure selon la revendication 1, **caractérisée en ce que** ledit au moins un élément capteur (14, 15) est logé de manière fixe dans le boîtier (12) et **en ce qu'**au moins un pôle auxiliaire (42) situé sur le boîtier (12) est affecté audit au moins un élément capteur (14, 15).

11. Sonde de mesure selon la revendication 1, **caractérisée en ce que** le dispositif amortisseur (17) est fixé de manière amovible sur une réception disposée sur le boîtier (12) ou pouvant être montée sur celui-ci.

12. Sonde de mesure destinée à mesurer l'épaisseur de couches minces, pourvue d'un boîtier (12) et d'au moins un élément capteur (14, 15) qui est monté de manière flexible par rapport au boîtier (12) grâce à au moins un élément ressort (33, 37) et qui présente, dans le sens inverse au sens de positionnent et dans son axe longitudinal (38), une calotte de positionnement (31) tournée vers la surface de mesure (25) d'un objet de mesure (26), sur le boîtier (12) étant prévu un dispositif amortisseur (17) qui agit dans le sens de positionnement (28) dudit au moins un élément capteur (14, 15) avant que l'élément capteur (14, 15) ne se pose sur la surface de mesure (25) de l'objet de mesure (26) et amortit ainsi le mouvement de positionnement effectué par ledit au moins un élément capteur (14, 15) en direction de la surface de mesure (25) de l'objet de mesure (26), **caractérisée en ce que** l'élément capteur (14, 15) est disposé dans une douille (45) de manière à pouvoir plonger dans celle-ci, la douille (45) étant disposée sur une partie de boîtier inférieure (47) du boîtier (12) sur laquelle appuie une tige (22) du dispositif amortisseur (17), et une partie de boîtier supérieure (48) du boîtier (12) étant disposée de manière fixe sur le dispositif amortisseur (17) et sur une douille de guidage (51) qui loge l'élément capteur (14, 15), de sorte que la douille (45) de l'élément capteur (14, 15) vient d'abord s'appliquer sur la surface de mesure (25) et qu'ensuite le dispositif amortisseur (17) procède à l'amortissement du mouvement de positionnement de l'élément capteur (14, 15) lorsque celui-ci vient se poser directement sur la surface de mesure (25).

13. Sonde de mesure selon l'une quelconque des revendications précédentes, **caractérisée en ce que** ledit au moins un élément de mesure de l'élément capteur comprend une bobine et/ou un capteur à effet Hall et **en ce que** l'élément capteur (14, 15) destiné à mesurer l'épaisseur de couches minces est réalisé selon le procédé magnéto-inductif et/ou selon le procédé par courants de Foucault, selon le procédé de sensibilité à la phase ou selon un procédé par champ magnétique continu.
